# EUROPÄISCHE PATENTSCHRIFT

(11) **EP 3 811 340 B1**
(45) Veröffentlichungstag und Bekanntmachung des Hinweises auf die Patenterteilung: **05.03.2025**
(21) Anmeldenummer: 19726622.4
(22) Anmeldetag: 21.05.2019
(51) Int. Cl.: G07C 9/00, B60R 25/24

(54) **VERFAHREN ZUM KALIBRIEREN EINES FUNKBASIERTEN SCHLÜSSELLOSEN ZUGANGSSYSTEMS EINES KRAFTFAHRZEUGS, ZUGANGSSYSTEM UND KRAFTFAHRZEUG**
METHOD FOR CALIBRATING A RADIO-BASED KEYLESS ACCESS SYSTEM OF A MOTOR VEHICLE, ACCESS SYSTEM, AND MOTOR VEHICLE
PROCÉDÉ D'ÉTALONNAGE D'UN SYSTÈME D'ACCÈS SANS CLÉ À BASE RADIO D'UN VÉHICULE À MOTEUR, SYSTÈME D'ACCÈS ET VÉHICULE À MOTEUR

(30) Priorität: 21.06.2018 DE 102018210072
(43) Veröffentlichungstag der Anmeldung: 28.04.2021
(73) Patentinhaber: VOLKSWAGEN AKTIENGESELLSCHAFT, 38440 Wolfsburg (DE)
(72) Erfinder: FRICKE, Christoph, 38118 Braunschweig (DE); THIELE, Andreas, 38442 Wolfsburg (DE); NEMETSCHEK, Dominique, 38458 Velpke (DE)
(74) Vertreter: 2SPL Patentanwälte PartG mbB
(86) Internationale Anmeldenummer: PCT/EP2019/063077
(87) Internationale Veröffentlichungsnummer: WO 2019/242965

(56) Entgegenhaltungen:
- DE-A1- 102015 226 150
- DE-T5- 112014 006 819

## Beschreibung

Die Erfindung betrifft ein Verfahren zum Kalibrieren eines funkbasierten schlüssellosen Zugangssystems eines Kraftfahrzeugs, ein entsprechendes funkbasiertes schlüsselloses Zugangssystem und ein Kraftfahrzeug mit einem derartigen Zugangssystem.

Funkbasierte schlüssellose Zugangssysteme für Kraftfahrzeuge sind an sich bereits bekannt. Derartige Systeme ermöglichen einem Benutzer beispielsweise eine automatische Entriegelung eines Kraftfahrzeugs, wenn ein von dem Benutzer mitgeführter Signalgeber oder Identifizierungsgeber (ID-Geber) in die Nähe des Kraftfahrzeugs gebracht wird. Dieser Signalgeber kann zwar in einen Schlüssel für das Kraftfahrzeug integriert sein, der Begriff "schlüssellos" bezieht sich im Sinne der vorliegenden Erfindung jedoch darauf, dass der Benutzer den Schlüssel beziehungsweise den Signalgeber nicht manuell betätigen muss, um das Kraftfahrzeug zu entriegeln. Auf dem entsprechenden technischen Gebiet werden derartige Zugangssysteme auch als keyless-access-System oder kurz Kessy-System, bezeichnet. Diese Zugangssysteme sollen eine jeweilige Funktionalität, also etwa das automatische Entriegeln des Kraftfahrzeugs, in einer vorgegebenen Entfernung von dem Kraftfahrzeug bereitstellen oder ausführen. In der praktischen Anwendung kann jedoch die Problematik beobachtet werden, dass die jeweilige Funktionalität tatsächlich je nach Umgebung in unterschiedlichen Entfernungen zu dem Kraftfahrzeug ausgelöst oder ausgeführt wird. Dies ist aus Sicherheitsgründen und hinsichtlich einer gewollten Konsistenz oder Vorhersagbarkeit eines Verhaltens des Zugangssystems unerwünscht.

Aus der DE 10 2015 226 150 A1 ist bereits ein Verfahren zum Kalibrieren einer Funkeinrichtung für ein Fahrzeug-Schließsystem bekannt, welches mehrere Antennen umfasst. Dabei werden mittels einer ersten, an einem ersten Ort des Fahrzeugs vorgesehenen Antenne erste Signale gesendet und mittels der ersten und/oder einer zweiten Antenne des Fahrzeugs empfangen. Von einer zweiten, an einem zweiten Ort des Fahrzeugs vorgesehenen Antenne werden zweite Signale ausgesandt, welche von mehreren der Antennen empfangen werden. Anhand von Empfangswerten für die ersten und zweiten Signale werden Daten eines Funk-Umgebungsmodells zu dem Fahrzeug gebildet.

Die DE 10 2008 012 882 A1 beschreibt eine elektrische Schaltung für eine Zugangskontrolle und für eine Wegfahrsperre eines Fahrzeugs. Dabei ist eine erste Antenne zum Senden eines Signals im Fall des Identifizierens eines ID-Gebers für die Zugangskontrolle des Fahrzeugs vorgesehen. Weiter ist eine zweite Antenne zum Aussenden eines Signals im Fall des Identifizierens eines ID-Gebers für die Wegfahrsperre des Fahrzeugs vorgesehen. Zum Empfang eines von einer Antenne empfangenen Signals zur Identifizierung eines ID-Gebers für die Wegfahrsperre ist eine Empfängereinrichtung vorgesehen. Dabei sind ein erster Antennentreiber zum Treiben der ersten Antenne und die Empfängereinrichtung gemeinsam in einem Halbleiterchip integriert.

Die US 2017 / 0 026 910 A1 betrifft ein passives Zugangs- und Startsystem für ein Fahrzeug. Dieses umfasst ein tragbares Gerät mit einem Transceiver, einen fahrzeugbasierten Transceiver und ein Steuergerät. Der fahrzeugbasierte Transceiver sendet ein Abfragesignal aus, in Antwort auf welches der Transceiver des tragbaren Geräts ein Antwortsignal überträgt. Das Steuergerät bestimmt eine Entfernung des tragbaren Geräts relativ zu dem fahrzeugbasierten Transceiver als Funktion einer Laufzeit der Abfrage- und Antwortsignale. Entsprechend der bestimmten Entfernung steuert das Steuergerät ein Mess-Tastverhältnis des Abfragesignals. Dabei kann ein größeres Tastverhältnis verwendet werden, je näher das tragbare Gerät sich an dem Fahrzeug befindet.

In der DE 10 2006 008 141 wird ein Verfahren zum Betrieb eines funkbasierten Identifikationssystems mit einer Zentraleinheit und zumindest einem Identifikationsgeber vorgestellt. Die Zentraleinheit erzeugt ein elektrisches Feld mit einer ersten Identifikationsinformation, welche der Identifikationsgeber erfasst und eine zweite Identifikationsinformation generiert und an die Zentraleinheit sendet. Dabei ist eine Zeitspanne, bezogen auf das Aussenden der ersten Identifikationsinformation, hinsichtlich Dauer und Lage vorgegeben und wird die zweite Identifikationsinformation nur innerhalb dieser vorgegebenen Zeitspanne angenommen. Die Zeitspanne ist dabei vorzugsweise variabel und wird während des Betriebs variiert.

Die DE 10 2015 109 275 A1 betrifft ein passives Zugangssystem für ein Kraftfahrzeug, bei dem der Abstand zwischen Fahrzeugschlüssel und Fahrzeug ermittelt wird. Vorgeschlagen wird eine Abstandsmessung mittels Auswertung des Empfangssignalstärkenanzeigers (RSSI; RSSI = received signal strength indicator), der Ankunftszeit (TOA; TOA = time of arrival) und/oder des Ankunftswinkels (AOA; AOA = angle of arrival).

Die DE 102 12 648 A1 betrifft ein Identifikationssystem zum Nachweis einer Berechtigung für den Zugang zu einem Kraftfahrzeug. Dabei wird der Abstand des Fahrzeugschlüssels zum Fahrzeug mittels Messen der Signallaufzeit des Antwortsignals oder der Laufzeit der Signale zwischen dem Aussenden des Abfragesignals und dem Empfangen des Antwortsignals ermittelt. Dieses kann über Zeitmessung oder über Phasenmessung erfolgen.

Die DE 10 2005 058 041 A1 zeigt ein Verfahren zum Betreiben eines Zugangssicherungssystems für ein Kraftfahrzeug. Dabei wird von Fahrzeug ein Signal an den Fahrzeugschlüssel gesendet. Der Fahrzeugschlüssel bildet ein zweites Signal, in welches die Information über die Empfangsstärke eingefügt wird, und sendet dieses zweite Signal über die drahtlose Verbindung zurück an das Fahrzeug. Die Empfangsstärke des ersten Signals wird mit der Empfangsstärke des zweiten Signals in Beziehung gesetzt und die Zugangsberechtigung festgestellt, wenn sich die beiden Empfangsstärken um weniger als einen vorgegebener Wert unterscheiden.

Die DE 10 2016 113 320 A1 zeigt ein Verfahren für ein funkbasiertes schlüsselloses Zugangssystem für ein Kraftfahrzeug, bei dem mittels einer ersten Sendeeinrichtung des Kraftfahrzeugs ein LF-Feld in eine Umgebung des Kraftfahrzeugs ausgestrahlt wird, und basierend auf einer mittels eines von dem Kraftfahrzeug separaten Signalgebers gemessenenen Feldstärke des LF-Feldes automatisch bestimmt wird, ob sich der Signalgeber in höchstens einer vorgegebenen Entfernung von dem Kraftfahrzeug befindet.

Die DE 11 2014 006 819 T5 beschreibt ein Passive-Entry-System für einen Personenkraftwagen mit einem Niederfrequenz-Sendeempfänger zum Senden eines Niederfrequenzsignals, einen Ultrabreitband-Sendeempfänger und eine Auswerteeinrichtung. Die Auswerteeinrichtung weist eine Berechnungseinheit auf, um eine erste Entfernungsmessung eines Schlüssels abzuleiten, die in einem ersten empfangenen Ultrabreitbandsignal kodiert ist und die von einer Signalstärke des Niederfrequenzsignals abgeleitet wird, um eine zweite Entfernungsmessung des Schlüssels von einem Empfangszeitpunkt eines zweiten empfangenen Ultrabreitbandsignals abzuleiten, um die erste Entfernungsmessung mit der zweiten Entfernungsmessung zu vergleichen und um eine Nichtübereinstimmung der Entfernung zwischen der ersten Entfernungsmessung und der zweiten Entfernungsmessung zu bestimmen.

Aufgabe der vorliegenden Erfindung ist es, eine Genauigkeit eines schlüssellosen Zugangssystems eines Kraftfahrzeugs zu verbessern.

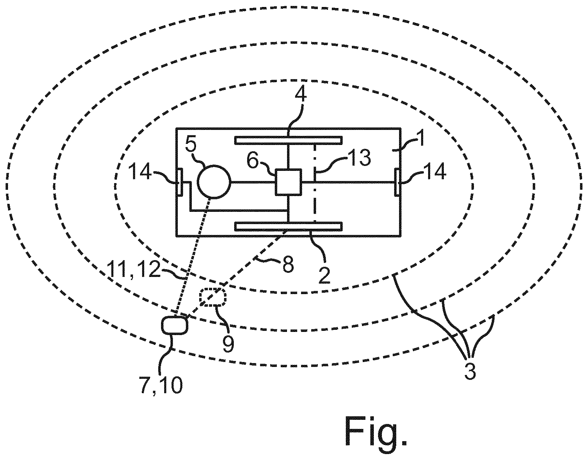

Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in der Zeichnung angegeben.

Ein erfindungsgemäßes Verfahren dient zum Kalibrieren eines funkbasierten schlüssellosen Zugangssystems eines Kraftfahrzeugs. Dabei wird mittels einer ersten Sendeeinrichtung des Kraftfahrzeugs ein LF-Feld in eine Umgebung des Kraftfahrzeugs ausgestrahlt. Das LF-Feld ist dabei ein elektromagnetisches Feld mit einer Frequenz aus dem LF-Band (LF: "low frequency"), also mit einer Frequenz aus dem Bereich von 30 kHz bis 300 kHz. Dieses niederfrequente LF-Feld kann vorteilhaft mit besonders geringem Energiebedarf und daher dauerhaft oder kontinuierlich ausgestrahlt werden. Mittels eines von dem Kraftfahrzeug separaten, insbesondere tragbaren, Signalgebers wird eine lokale Feldstärke des LF-Feldes am jeweiligen Ort des Signalgebers gemessen. Basierend auf dieser gemessenen Feldstärke des LF-Feldes wird dann automatisch bestimmt, ob sich der Signalgeber in höchstens einer vorgegebenen Entfernung von dem Kraftfahrzeug befindet. Hierfür können vorgegebene Standardbedingungen verwendet werden. Mit anderen Worten kann also beispielsweise ein Kennfeld oder eine Funktion oder dergleichen vorgegeben und hinterlegt sein, welche die mit zunehmender Entfernung von dem Kraftfahrzeug abfallende Feldstärke des LF-Feldes unter den vorgegebenen Standardbedingungen beschreibt. Dieses auf der gemessenen Feldstärke des LF-Feldes basierende Bestimmen der - angenommenen - Entfernung des Signalgebers von dem Kraftfahrzeug kann mittels einer Daten- oder Signalverarbeitungseinrichtung durchgeführt werden.

Diese Daten- oder Signalverarbeitungseinrichtung kann in dem Signalgeber selbst und/oder in oder an dem Kraftfahrzeug angeordnet sein. In ersterem Fall kann der Signalgeber ein Daten- oder Steuersignal an das Kraftfahrzeug senden oder übermitteln, um wenigstens eine Funktion oder Funktionalität des Kraftfahrzeugs beziehungsweise des schlüssellosen Zugangssystems zu aktivieren oder auszulösen. In letzterem Fall kann der Signalgeber beispielsweise einen von ihm gemessenen Messwert der Feldstärke an das Kraftfahrzeug beziehungsweise die in dem Kraftfahrzeug angeordnete Daten- oder Signalverarbeitungseinrichtung übermitteln, welche daraus dann bestimmt, ob sich der Signalgeber in höchstens der vorgegebenen Entfernung zu dem Kraftfahrzeug befindet. Die entsprechende Funktion oder Funktionalität kann also ausgelöst oder aktiviert oder durchgeführt werden, wenn und/oder solange der Signalgeber nicht weiter als die vorgegebene Entfernung von dem Kraftfahrzeug entfernt ist. Ebenso kann beispielsweise die und/oder eine weitere Funktion oder Funktionalität aktiviert oder ausgelöst werden, wenn die derart bestimmte Entfernung des Signalgebers von dem Kraftfahrzeug die vorgegebene Entfernung überschreitet, der Signalgeber also nicht mehr innerhalb der vorgegebenen Entfernung zu dem Kraftfahrzeug detektierbar ist. In letzterem Fall kann das Kraftfahrzeug beispielsweise automatisch verriegelt werden. Auf diese Weise dient das funkbasierte schlüssellose Zugangssystem also zum Bereitstellen wenigstens einer Funktion oder Funktionalität in der vorgegebenen Entfernung zu dem Kraftfahrzeug.

Die vorgegebene Entfernung kann dabei abhängig sein von der jeweiligen Funktion oder Funktionalität. So können beispielsweise unterschiedliche Entfernungen für unterschiedliche Funktionen oder Funktionalitäten vorgegeben sein. Beispielsweise kann es vorgesehen sein, dass eine Beleuchtungseinrichtung des Kraftfahrzeugs automatisch aktiviert wird, wenn sich der Signalgeber bis zumindest auf eine erste vorgegebene Entfernung, beispielsweise bis auf 6 m, an das Kraftfahrzeug angenähert hat. Hat sich der Signalgeber bis auf eine zweite vorgegebene Entfernung, beispielsweise bis auf 2 m, an das Kraftfahrzeug angenähert, so kann eine zweite Funktion ausgelöst werden, beispielsweise eine Entriegelung des Kraftfahrzeugs.

Erfindungsgemäß ist es vorgesehen, dass wenn eine an den Signalgeber und/oder an einen Betrieb des Kraftfahrzeugs gekoppelte vorgegebene Bedingung erfüllt ist, mittels einer zweiten Sendeeinrichtung des Kraftfahrzeugs ein Kalibrierungssignal mit einer im Vergleich zu dem LF-Feld höheren Frequenz ausgesendet wird. Der Signalgeber empfängt dieses Kalibrierungssignal und sendet daraufhin ein Antwortsignal mit einer ebenfalls im Vergleich zu dem LF-Feld höheren Frequenz - insbesondere mit derselben Frequenz wie das Kalibrierungssignal - an das Kraftfahrzeug zurück. Aus einer Signallaufzeit des Kalibrierungssignals und des Antwortsignals zwischen dem Aussenden des Kalibrierungssignals und einem Empfangen des Antwortsignals durch das Kraftfahrzeug wird automatisch eine Referenzentfernung des Signalgebers von dem Kraftfahrzeug bestimmt. Das Kraftfahrzeug, beispielsweise die zweite Sendeeinrichtung, kann insbesondere also eine Empfangseinrichtung für das Antwortsignal umfassen. Die Referenzentfernung stellt dabei insbesondere die zumindest im Rahmen der jeweiligen Messgenauigkeit tatsächliche Entfernung des Signalgebers von dem Kraftfahrzeug dar.

Das auf der gemessenen Feldstärke des LF-Feldes basierende Bestimmen, ob sich der Signalgeber in höchstens der vorgegebenen Entfernung von dem Kraftfahrzeug befindet, wird dann in Abhängigkeit von der anhand der Signallaufzeit bestimmten Referenzentfernung automatisch kalibriert. Mit anderen Worten wird also die Entfernung des Signalgebers von dem Kraftfahrzeug auf zwei unterschiedliche und unabhängige Arten und Weisen, insbesondere unter Verwendung von zwei unterschiedlichen Frequenzen, bestimmt. Die anhand der Signallaufzeit (Time-of-Flight) bestimmte Referenzentfernung dient dabei als Referenz- oder Zielwert, der auch von der auf der gemessenen LF-Feldstärke basierenden Entfernungsbestimmung als Ergebnis für die entsprechende tatsächliche Position oder Entfernung des Signalgebers relativ zu dem Kraftfahrzeug geliefert werden soll. Dies wird durch das Kalibrieren eingestellt, also sichergestellt. Die auf der Signallaufzeit basierende Entfernungsbestimmung wird dabei bevorzugt insbesondere dann durchgeführt, wenn zwischen dem Kraftfahrzeug, insbesondere der zweiten Sendeeinrichtung, und dem Signalgeber eine direkte Sichtverbindung (Line-of-Sight-Verbindung), besteht, das Kalibrierungssignal und das Antwortsignal also zwischen dem Kraftfahrzeug und dem Signalgeber direkt übertragen, also ohne Reflexionen ausgetauscht oder übermittelt werden können.

Auf diese Weise kann vorteilhaft ein Einfluss, den eine Umgebung, insbesondere ein Untergrund, des Kraftfahrzeugs auf eine Ausbreitung und letztlich auf die entfernungsabhängige Feldstärke oder Feldstärkeänderung des LF-Feldes haben kann, automatisch berücksichtigt. So kann beispielsweise die gemessene Feldstärke des LF-Feldes bei gleicher Sende- oder Ausgangsleistung der ersten Sendeeinrichtung in einer bestimmten Entfernung von dem Kraftfahrzeug einen höheren Wert aufweisen, wenn sich das Kraftfahrzeug in einer Stahlbetonstruktur, beispielsweise einem Parkhaus, befindet als wenn sich das Kraftfahrzeug beispielsweise im Freien auf einer Wiese befindet. Dies kann dazu führen, dass die basierend auf der gemessenen LF-Feldstärke, also der Feldstärke des LF-Feldes, bestimmte angenommene Entfernung des Kraftfahrzeugs kleiner ist als die Referenzentfernung und insbesondere als die tatsächliche oder reale Entfernung des Signalgebers von dem Kraftfahrzeug. Letztere kann anhand der Signallaufzeit des Kalibrierungssignals und des Antwortsignals mit einer höheren Genauigkeit bestimmt werden. Dementsprechend kann es beispielsweise vorgesehen sein, dass die entsprechende Funktion oder Funktionalität erst dann tatsächlich ausgelöst wird, wenn nach dem Kalibrieren oder unter Berücksichtigung der bestimmten Referenzentfernung bestimmt oder bestätigt wurde, dass sich der Signalgeber tatsächlich in höchstens der vorgegebenen Entfernung von dem Kraftfahrzeug befindet. Dies kann zumindest für zukünftige Funktionsauslösungen beziehungsweise auf der jeweiligen gemessenen Feldstärke des LF-Feldes basierende Bestimmungen der jeweiligen Entfernung gelten, insbesondere solange sich das Kraftfahrzeug an der jeweils aktuellen Position oder in der jeweils aktuellen Umgebung befindet, sich also beispielsweise um weniger als eine vorgegebene Strecke bewegt hat, seitdem zum jeweils letzten Mal die Referenzentfernung bestimmt wurde. Die Referenzentfernung kann also automatisch jeweils dann bestimmt, das Kalibrierungssignal also jeweils dann automatisch ausgesendet werden, wenn sich das Kraftfahrzeug um wenigstens eine vorgegebene Strecke bewegt hat. Ebenso sind weitere vorgegebene Bedingungen für das jeweilige Aussenden des Kalibrierungssignals, also zum jeweils erneuten Bestimmen der Referenzentfernung möglich, welche weiter unten erläutert werden.

Dass die Bedingung an den Signalgeber und/oder an einen Betrieb des Kraftfahrzeugs gekoppelt ist, bedeutet, dass sie nicht willkürlich ist, sondern mit dem Signalgeber, dem Kraftfahrzeug und/oder deren Betrieb oder Verhalten zusammenhängt, also daran gebunden ist. So kann als die Bedingung beispielsweise ein bestimmter Schaltzustand oder -vorgang, eine automatisch oder manuell von dem Benutzer vorgenommene Funktionsauslösung oder Bedienhandlung des Signalgebers und/oder des Kraftfahrzeugs und/oder dergleichen mehr vorgesehen sein, also verwendet oder ausgewertet werden. Die Bedingung kann beispielsweise erfüllt sein, wenn mit positivem Ergebnis überprüft wurde, ob eine Geschwindigkeit des Kraftfahrzeugs bis unterhalb eines vorgegebenen Schwellenwertes abgesunken ist, ein Motor oder eine Zündung des Kraftfahrzeugs ausgeschaltet wurde beziehungsweise ausgeschaltet ist, eine Fahrzeugtüre des Kraftfahrzeugs geöffnet wurde, eine Taste an dem Signalgeber betätigt wurde und/oder dergleichen mehr.

Die vorliegende Erfindung hat den Vorteil, dass aufgrund der automatischen Kalibrierung eine Genauigkeit der Entfernungsbestimmung auch dann verbessert wird, wenn die Entfernung basierend auf der jeweils gemessenen Feldstärke des LF-Feldes bestimmt wird. Dies kann insbesondere automatisch und für den Benutzer transparent, also von diesem unbemerkt, durchgeführt werden. Insbesondere kann das Zugangssystem beziehungsweise das Kraftfahrzeug so flexibel an unterschiedliche Umgebungen angepasst werden, also auch in unterschiedlichen Umgebungen, Situationen oder Bedingungen stets ein konsistentes Verhalten aufweisen. Besonders vorteilhaft wird dies ohne übermäßig hohen Energieverbrauch ermöglicht oder erreicht, wie er beispielsweise bei einer dauerhaften Nutzung der mit höherer Frequenz betriebenen zweiten Sendeeinrichtung und der dauerhaften oder ausschließlichen Entfernungsbestimmung anhand der Signallaufzeit auftreten würde.

Das beschriebene Verfahren kann als Einmessen oder Einmessung des LF-Feldes durch die Time of Flight-Messung aufgefasst oder bezeichnet werden. Durch dieses Einmessen muss das funkbasierte schlüssellose Zugangssystem vorteilhaft nicht wie bisher auf einen schlechtest möglichen Fall (worst case) abgestimmt oder für ein entsprechendes Worstcase-Szenario parametriert werden, sondern kann situationsabhängig jeweils ein volles Potenzial erreichen. Insgesamt kann durch die vorliegende Erfindung also vorteilhaft sichergestellt werden, dass der jeweilige Benutzer oder Kunde bestimmte Fahrzeugfunktionen oder Funktionsauslösungen unabhängig von äußeren Einflüssen oder Gegebenheiten in der gleichen Entfernung von dem Kraftfahrzeug, also mit jeweils gleicher Reichweite wahrnimmt.

Somit kann also der umgebungs- oder untergrundabhängig zu beobachtende Nachteil einer Überreichweite des LF-Feldes aufgrund eines Einflusses unterschiedlicher Fahrzeuguntergründe, dynamischer Parkszenarien und/oder baulicher Randbedingungen umgangen oder ausgeglichen werden.

In vorteilhafter Ausgestaltung der vorliegenden Erfindung wird für das Kalibrierungssignal und das Antwortsignal eine Frequenz aus dem SHF-Band verwendet. Mit anderen Worten wird eine Frequenz aus dem Bereich von 3 GHz bis 30 GHz verwendet. Dies ermöglicht vorteilhaft eine präzise und sichere Entfernungsbestimmung. Dazu können bevorzugt bekannte Funktechniken oder -standards verwendet werden, wie beispielsweise UWB (Ultrawideband), Bluetooth, WiFi, und ähnliche. Für das Bestimmen der Referenzentfernung kann vorteilhaft also auf verfügbare Technik zurückgegriffen werden, wodurch vorteilhaft eine besonders kostengünstige und zuverlässige Realisierung ebenso ermöglicht wird, ebenso wie eine Mehrfachnutzung der zweiten Sendeeinrichtung für andere Funktionen. Konkret kann beispielsweise eine Frequenz von 6,6 GHz verwendet werden.

Erfindungsgemäß wird mittels der ersten Sendeeinrichtung ein LF-Referenzsignal mit einer vorgegebenen Sendeleistung ausgesendet und mittels einer an dem Kraftfahrzeug in einem festen Abstand zu der ersten Sendeeinrichtung angeordneten LF-Empfangseinrichtung eine Feldstärke des LF-Referenzsignals gemessen. Die LF-Empfangseinrichtung stellt also einen Rücklesekanal für das LF-Referenzsignal in oder an dem Fahrzeug bereit. Aus der gemessenen Feldstärke des LF-Referenzsignals, der vorgegebenen Sendeleistung sowie der Entfernung zwischen der ersten Sendeeinrichtung und der LF-Empfangseinrichtung wird automatisch ein Korrekturfaktor bestimmt. Dieser Korrekturfaktor gibt eine umgebungsbedingte Abweichung der gemessenen Feldstärke des LF-Referenzsignals zu einer vorgegebenen Referenzfeldstärke an. Die vorgegebene Referenzfeldstärke ist dabei insbesondere diejenige Feldstärke, die unter vorgegebenen Standardbedingungen mittels der LF-Empfangseinrichtung für das LF-Referenzsignal gemessen würde. Die Referenzfeldstärke ist also eine erwartete Feldstärke am Ort der LF-Empfangseinrichtung. Der Korrekturfaktor wird dann ebenfalls für das Kalibrieren des Bestimmens, ob sich der Signalgeber in höchstens der vorgegebenen Entfernung von dem Kraftfahrzeug befindet, berücksichtigt. Mit anderen Worten wird also eine Auswirkung oder ein Einfluss einer jeweils aktuellen Umgebung, insbesondere eines jeweils aktuellen Untergrundes, auf dem sich das Kraftfahrzeug befindet, auf die Ausbreitung oder entfernungsabhängige Abschwächung des LF-Feldes direkt gemessen.

Erfindungsgemäß wird das LF-Referenzsignal in Richtung des Untergrundes abgestrahlt oder ausgesendet. Mittels der LF-Empfangseinrichtung wird dann das von dem Untergrund reflektierte LF-Referenzsignal empfangen, also gemessen. Dadurch ist sichergestellt, dass ein jeweiliger Einfluss des Untergrundes tatsächlich in der gemessenen Feldstärke des LF-Referenzsignals berücksichtigt ist.

Der Korrekturfaktor kann im einfachsten Fall eine Zahl sein, welche beispielsweise eine prozentuale Abweichung oder Dämpfung der gemessenen Feldstärke gegenüber der vorgegebenen Referenzfeldstärke quantifiziert. Ebenso kann der Korrekturfaktor jedoch beispielsweise ein Kennfeld, eine Matrix oder eine Funktion sein. Der Korrekturfaktor kann dann beispielsweise unterschiedliche Abweichungen oder Dämpfungswerte für unterschiedliche Entfernungen und/oder Richtungen angeben. Letzteres kann insbesondere dann der Fall sein, wenn die erste Sendeeinrichtung mehrere Sendeantennen und/oder die LF-Empfangseinrichtung mehrere Empfangsantennen umfasst. Damit ist dann eine richtungsaufgelöste Messung der Feldstärke möglich. Das LF-Referenzsignal kann dem LF-Feld entsprechen, also das LF-Feld sein, welches ohnehin ausgestrahlt wird. Ebenso kann das LF-Referenzsignal jedoch ein dediziertes Signal sein, welches zwar insbesondere die gleiche Frequenz wie das LF-Feld aufweisen kann, jedoch nur zu einem oder mehreren bestimmten vorgegebenen Zeitpunkten und/oder bei Erfülltsein einer - beispielsweise der bereits genannten - vorgegebenen Bedingung in eine andere Richtung als das LF-Feld ausgestrahlt wird. Dazu kann die erste Sendeeinrichtung beispielsweise eine dedizierte Sendeantenne zum Aussenden des LF-Referenzsignals aufweisen. Zusätzlich oder alternativ kann eine zum Ausstrahlen des LF-Feldes verwendete Sendeantenne der ersten Sendeeinrichtung zum Aussenden des LF-Referenzsignals verwendet werden.

Durch die definierte, bekannte und insbesondere feste, also unveränderliche relative Anordnung der ersten Sendeeinrichtung und der LF-Empfangseinrichtung zueinander kann über das Aussenden und Empfangen des LF-Referenzsignals eine Relation zwischen der Feldstärke und der Reichweite hergestellt und somit auf die Umgebungseinflüsse, welche die Feldstärke beziehungsweise Reichweite beeinflussen können, geschlossen und letztlich reagiert werden. Der Signalgeber verfügt zwar ebenfalls über die Mittel zum Messen der Feldstärke des LF-Referenzsignals, er befindet sich jedoch nicht stets zuverlässig in einer exakt bekannten Position oder Entfernung zu der ersten Sendeeinrichtung. Die von dem Signalgeber gemessene Feldstärke des LF-Feldes kann daher nicht für das Kalibrieren verwendet werden.

Die erste Sendeeinrichtung, die LF-Empfangseinrichtung und die oben genannte Daten- oder Signalverarbeitungseinrichtung können einen geschlossenen Regelkreis bilden, mittels welchem der Einfluss der Umgebung oder des Untergrundes auf das LF-Feld beziehungsweise dessen Ausbreitung oder Reichweite als Stellgröße ausgesteuert werden kann. Dies ist vorteilhaft mit besonders geringem zusätzlichem Energieaufwand möglich, da das LF-Feld beziehungsweise die erste Sendeeinrichtung verwendet werden. Zudem kann die vorgegebene Sendeleistung, mit welcher das LF-Referenzsignal ausgesendet wird, geringer sein als eine zum Ausstrahlen des LF-Feldes verwendete Sendeleistung, da beispielsweise lediglich die umgebungsbedingte Veränderung und nicht notwendigerweise die absolute Feldstärke gemessen oder berücksichtigt werden müssen. Als Aktor des Regelkreises kann beispielsweise die Signalverarbeitungseinrichtung dienen, indem sie in Abhängigkeit von der gemessenen Feldstärke beziehungsweise dem Korrekturfaktor eine zum Bestimmen der Entfernung verwendete Auswertematrix oder Berechnungsvorschrift oder dergleichen anpasst.

Die erste Sendeeinrichtung und die LF-Empfangseinrichtung können beispielsweise an einander gegenüberliegenden seitlichen Schwellern des Kraftfahrzeugs angeordnet sein. Die erste Sendeeinrichtung und/oder die LF-Empfangseinrichtung können jeweils als 1D-Antenne oder 1D-Spule ausgebildet sein. Dies ist mit besonders geringem Material-, Bauteilund Kostenaufwand realisierbar. Ebenso können die erste Sendeeinrichtung und/oder die LF-Empfangseinrichtung jeweils als 3D-Antennen ausgebildet sein oder jeweils wenigstens eine 3D-Antenne umfassen, was vorteilhaft eine flexiblere Platzierung oder Anordnung in oder an dem Kraftfahrzeug ohne Verlust der Leistungsfähigkeit ermöglicht.

In weiterer vorteilhafter Ausgestaltung der vorliegenden Erfindung wird für oder als das Kalibrieren, also bei dem Kalibrieren ein der vorgegebenen Entfernung zugeordneter vorgegebener Schwellenwert der Feldstärke des LF-Feldes automatisch dynamisch angepasst. Zum Bestimmen, ob sich der Signalgeber höchstens in der vorgegebenen Entfernung zu dem Kraftfahrzeug befindet, wird dann die gemessene Feldstärke des LF-Feldes mit dem angepassten Schwellenwert verglichen. Dieses auf der gemessenen Feldstärke des LF-Feldes basierende Bestimmen der Entfernung des Signalgebers durch Vergleich der jeweils gemessenen Feldstärke mit einem vorgegebenen Schwellenwert, der der vorgegebenen Entfernung entspricht oder zugeordnet ist, kann bei jeder Ausführungsform des erfindungsgemäßen Verfahrens angewendet werden. Das dynamische Anpassen des Schwellenwertes für das Kalibrieren bedeutet dabei, dass die Zuordnung oder die vorgegebene Abhängigkeit zwischen der Entfernung und der gemessenen Feldstärke angepasst, gegebenenfalls also verändert wird.

Beispielsweise kann ursprünglich oder herstellerseitig der Signalgeber genau in der vorgegebenen Entfernung angeordnet und die Feldstärke des LF Feldes an dieser Position oder in dieser Entfernung unter vorgegebenen Standardbedingungen gemessen werden. Dementsprechend wird dann ein dabei gemessener Wert der Feldstärke der vorgegebenen Entfernung zugeordnet. Dies kann beispielsweise herstellerseitig vor einer Auslieferung des Zugangssystems oder des Kraftfahrzeugs einmalig durchgeführt werden. Befindet sich das Kraftfahrzeug dann in einem späteren Einsatz beispielsweise in einer die Ausbreitung des LF-Feldes gegenüber den vorgegebenen Standardbedingungen begünstigenden Umgebung, so kann eine höhere oder größere Feldstärke gemessen werden, wenn und obwohl sich der Signalgeber tatsächlich ebenfalls in der vorgegebenen Entfernung befindet. In einem solchen Falle würde dann der vorgegebenen Entfernung ein höherer Schwellenwert zugeordnet, welcher vor dieser Anpassung als eine im Vergleich zu der vorgegebenen Entfernung geringere Entfernung anzeigend interpretiert worden wäre. Auf diese Weise kann das Zugangssystem besonders einfach und beliebig wiederholbar automatisch dynamisch angepasst, also kalibriert werden. Da hier also lediglich eine datenbasierte Zuordnung oder Auswertung jeweiliger Messwerte angepasst wird, kann vorteilhaft beispielsweise auf eine technisch aufwändigere Steuerung oder Regelung oder Anpassung der ersten Sendeeinrichtung und/oder der von dieser zum Ausstrahlen des LF-Feldes verwendeten Sendeleistung verzichtet werden.

In weiterer vorteilhafter Ausgestaltung der vorliegenden Erfindung wird für oder als das Kalibrieren, also bei dem Kalibrieren, eine zum Ausstrahlen des LF-Feldes verwendete Sendeleistung der ersten Sendeeinrichtung automatisch dynamisch angepasst. In dem oben beschriebenen Beispiel, in dem sich das Kraftfahrzeug in der die Ausbreitung des LF-Feldes unterstützenden Umgebung befindet, könnte dann also die Sendeleistung der ersten Sendeeinrichtung beziehungsweise des LF-Feldes reduziert werden. Dadurch kann dann erreicht werden, dass in der vorgegebenen Entfernung auch in der neuen Umgebung wieder die unter den Standardbedingungen gemessene beziehungsweise erwartete Feldstärke des LF-Feldes vorliegt, also gemessen würde. Hierdurch kann vorteilhaft das gewünschte konsistente Verhalten des Zugangssystems mit zumindest im Durchschnitt reduziertem Energiebedarf oder Energieverbrauch realisiert werden.

Ebenso ist eine Kombination der genannten Maßnahmen für das Kalibrieren möglich. Dies kann insbesondere dann sinnvoll sein, wenn ein möglicher Verstellumfang der Sendeleistung nicht ausreicht, um den jeweiligen Umgebungseinfluss auszugleichen.

In weiterer vorteilhafter Ausgestaltung der vorliegenden Erfindung wird als die vorgegebene Bedingung überprüft, ob sich der Signalgeber von dem Kraftfahrzeug entfernt oder an das Kraftfahrzeug annähert. Mit anderen Worten kann das Kalibrierungssignal also dann ausgesendet werden, wenn ermittelt oder detektiert wird, dass sich der Signalgeber von dem Kraftfahrzeug entfernt und/oder dann, wenn ermittelt oder detektiert wird, dass sich der Signalgeber an das Kraftfahrzeug annähert. In einem solchen Fall kann davon ausgegangen werden, dass sich das Kraftfahrzeug nicht im aktiven Verkehrsgeschehen befindet, sich also die jeweiligen Umgebungsbedingungen voraussichtlich nicht unmittelbar ändern werden. Es kann also dann davon ausgegangen werden, dass die Funktionalität des Zugangssystems voraussichtlich in Anspruch genommen werden wird, bevor das Kraftfahrzeug in eine andere Umgebung bewegt wird. ,Dadurch dass in einer solchen Situation dann das Zugangssystem wie beschrieben kalibriert wird, kann zumindest für diese nächste Funktionsinanspruchnahme das erwartete, konsistente entfernungsabhängige Verhalten eingestellt oder sichergestellt werden. Dabei kann ebenfalls eine Richtung detektiert und berücksichtigt werden, aus der sich der Signalgeber annähert oder in welche sich der Signalgeber entfernt. Bei entsprechender richtungsauflösender oder richtungssensitiver Auslegung des Zugangssystems, insbesondere der ersten Sendereinrichtung, kann dann das Kalibrieren richtungsabhängig, also für die jeweilige detektierte Richtung des Signalgebers vorgenommen werden.

In weiterer vorteilhafter Ausgestaltung der vorliegenden Erfindung wird als die vorgegebene Bedingung ein Auftreten eines Feldstärkesprunges in der Feldstärke des LF-Feldes verwendet oder ausgewertet. Mit anderen Worten wird also die LF-Feldstärke - mittels des Signalgebers und/oder mittels der LF-Empfangseinrichtung - kontinuierlich oder regelmäßig gemessen und eine sprunghafte oder diskontinuierliche Veränderung der Feldstärke detektiert. Ein solcher Feldstärkesprung kann beispielsweise an einem Übergang zwischen zwei unterschiedlichen Untergründen oder Untergrundarten, also in zwei voneinander verschiedenen und nicht kontinuierlich ineinander übergehenden Umgebungen oder Umgebungsbedingungen auftreten. Insbesondere kann ein solcher Feldstärkesprung also auftreten, wenn oder während sich das Kraftfahrzeug bewegt. Dies kann beispielsweise während eines, insbesondere automatischen oder ferngesteuerten, Rangier- oder Einbeziehungsweise Ausparkvorganges der Fall sein. In einem solchen Fall kann sich der Signalgeber trotz der Bewegung des Kraftfahrzeugs beispielsweise außerhalb von diesem befinden, sodass die auf der Signallaufzeit basierende Bestimmung der Referenzentfernung besonders genau und zuverlässig möglich ist. Dadurch dass die vorgegebene Bedingung als erfüllt angesehen wird, wenn ein solcher Feldstärkesprung, beispielsweise einer vorgegebenen Stärke oder Intensität, vorliegt, also detektiert oder erfasst wird, kann vorteilhaft stets auf eine jeweils neue oder veränderte Umgebung, die sich zumindest in einem vorgegebenen Maße hinsichtlich einer Dämpfungseigenschaft oder einer Ausbreitungscharakteristik des LF-Feldes von der jeweils bisherigen Umgebung unterscheidet, reagiert werden. Dadurch kann sichergestellt werden, dass das Zugangssystem in jeder Umgebung automatisch kalibriert ist, ohne dass hierfür dauerhaft oder kontinuierlich das Kalibrierungssignal ausgesendet und dessen Signallaufzeit bestimmt werden müsste. Somit wird also vorteilhaft ein besonders guter Kompromiss zwischen einem Energiebedarf für das Zugangssystem, insbesondere das Kalibrieren, und einer Genauigkeit des Zugangssystems beziehungsweise der Entfernungsbestimmung erreicht.

In weiterer vorteilhafter Ausgestaltung der vorliegenden Erfindung wird als die vorgegebene Bedingung ein Zeitraster verwendet oder ausgewertet, gemäß welchem das Kalibrierungssignal jeweils ausgesendet wird nach einer vorgegebenen Anzahl von auf der gemessenen Feldstärke des LF-Feldes basierenden Bestimmungen der Entfernung des Signalgebers von dem Kraftfahrzeug. Mit anderen Worten wird als die vorgegebene Bedingung also überprüft, wie oft die Entfernung des Signalgebers von dem Kraftfahrzeug durch Messung der Feldstärke des LF-Feldes durchgeführt worden ist, seitdem zuletzt die Referenzentfernung auf Basis der Signallaufzeit des Kalibrierungssignals und des entsprechenden Antwortsignals durchgeführt worden ist. Entspricht diese Anzahl wenigstens der vorgegebenen Anzahl, so wird automatisch das Kalibrierungssignal ausgesendet und die Referenzentfernung bestimmt. Beispielsweise kann bei oder nach jeder zwanzigsten auf der gemessenen Feldstärke des LF-Feldes basierenden Entfernungsbestimmung die Referenzentfernung basierend auf der Signallaufzeit bestimmt und das Zugangssystem kalibriert werden. Diese Bedingung kann besonders einfach und ohne zusätzlichen Messaufwand überprüft und überwacht werden. Auch hierdurch wird vorteilhaft ein besonders guter Kompromiss zwischen dem Energiebedarf und der Genauigkeit des Zugangssystems erreicht.

Ein weiterer Aspekt der vorliegenden Erfindung ist ein funkbasiertes schlüsselloses Zugangssystem für ein Kraftfahrzeug, umfassend einen tragbaren Signalgeber, eine erste Sendeeinrichtung für das Kraftfahrzeug zum Ausstrahlen eines LF-Feldes, eine zweite Sendeeinrichtung für das Kraftfahrzeug zum Ausstrahlen eines Kalibrierungssignals mit einer im Vergleich zu dem LF-Feld höheren Frequenz, und eine Daten- oder Signalverarbeitungseinrichtung. Erfindungsgemäß ist das Zugangssystem, insbesondere die Signalverarbeitungseinrichtung, dazu eingerichtet, mindestens eine Variante des erfindungsgemäßen Verfahrens automatisch durchzuführen. Das erfindungsgemäße Zugangssystem kann insbesondere das im Zusammenhang mit dem erfindungsgemäßen Verfahren genannte Zugangssystem sein. Das Zugangssystem, insbesondere die Signalverarbeitungseinrichtung, kann einen Datenspeicher umfassen, in dem ein Programmcode abgelegt oder gespeichert ist, welcher die Verfahrensschritte des erfindungsgemäßen Verfahrens kodiert oder repräsentiert. Weiterhin kann das Zugangssystem, insbesondere die Signalverarbeitungseinrichtung, eine mit diesem Datenspeicher gekoppelte Prozessoreinrichtung zum Ausführen des Programmcodes umfassen. Darüber hinaus kann das erfindungsgemäße Zugangssystem weitere Bauteile oder Komponenten umfassen, wie beispielsweise eine zugehörige Verkabelung, Anschlüsse, Verbindungen, Gehäuse, Schnittstellen und/oder dergleichen mehr.

Der, insbesondere tragbare, Signalgeber kann ein eigenes Gerät oder in einen Fahrzeugschlüssel für das Kraftfahrzeug integriert sein. Ebenso kann zusätzlich oder alternativ beispielsweise ein mobiles Endgerät, wie etwa ein Smartphone, eine Smartwatch, ein Wearable Device, oder dergleichen, als der Signalgeber verwendet werden.

Ein weiterer Aspekt der vorliegenden Erfindung ist ein Kraftfahrzeug mit einem erfindungsgemäßen funkbasierten schlüssellosen Zugangssystem. Das erfindungsgemäße Kraftfahrzeug kann insbesondere das im Zusammenhang mit dem erfindungsgemäßen Zugangssystem und/oder im Zusammenhang mit dem erfindungsgemäßen Verfahren genannte Kraftfahrzeug sein. Dementsprechend kann das erfindungsgemäße Kraftfahrzeug ebenso die dort beschriebenen Eigenschaften und/oder Bauteile oder Komponenten aufweisen. Dies kann beispielsweise die LF-Empfangseinrichtung und/oder eine Empfangseinrichtung für das Antwortsignal betreffen.

In weiterer bevorzugter Ausgestaltung der Erfindung kann das erfindungsgemäße Zugangssystem oder das erfindungsgemäße Kraftfahrzeug eine Umgebungserfassungseinrichtung aufweisen. Diese kann beispielsweise wenigstens eine Kamera zum Erfassen einer Umgebung des Kraftfahrzeugs, insbesondere des Untergrundes in dem Bereich oder der Umgebung des Kraftfahrzeugs, umfassen. Es kann dann ein Bildverarbeitungs- oder Bilderkennungssystem oder -algorithmus bereitgestellt sein, welcher anhand von von der Kamera gelieferten Bilddaten der Umgebung oder des Untergrundes die jeweilige Umgebung beziehungsweise den jeweiligen Untergrund kategorisiert oder klassifiziert, also bezüglich seiner Art bestimmt oder einordnet. Weiter kann eine Zuordnungstabelle, ein Kennfeld oder dergleichen vorgegeben sein, welches einen Zusammenhang oder eine Zuordnung zwischen verschiedenen Umgebungen, Untergründen oder Untergrundarten und einer zugehörigen Auswirkung auf das LF-Feld, insbesondere eine zugehörige Dämpfung oder Ausbreitungscharakteristik des LF-Feldes, in diesen Umgebungen und/oder auf oder über diesen Untergründen oder Untergrundarten angibt. Die jeweils erkannte Umgebung oder der jeweils erkannte Untergrund kann dann zusammen mit der vorgegebenen Zuordnungstabelle beziehungsweise dem vorgegebenen Kennfeld ebenfalls für das Kalibrieren verwendet oder berücksichtigt werden.

Ebenso kann auf Basis der erkannten Umgebung beziehungsweise des erkannten Untergrundes und der vorgegebenen Zuordnungstabelle beziehungsweise des vorgegebenen Kennfeldes die auf der gemessenen Feldstärke des LF-Feldes und/oder die anhand der Signallaufzeit durchgeführte Entfernungsbestimmung und/oder die Bestimmung des Korrekturfaktors plausibilisiert werden. Durch einen entsprechenden Abgleich der jeweiligen gemessenen oder bestimmten Werte mit der Art des Untergrundes oder der Umgebung kann bei signifikanten Abweichungen oder Diskrepanzen beispielsweise auf ein Vorliegen einer lokalen Besonderheit geschlossen werden. Beispielsweise kann das Kraftfahrzeug zwar auf einer Wiese geparkt sein, sich aber zufällig gerade oberhalb eines metallischen Objektes befinden. In einem solchen Fall kann dann eine Diskrepanz auftreten zwischen der gemessenen Dämpfung und der anhand der Bilddaten des Untergrundes erwarteten Dämpfung. Es kann dann beispielsweise davon ausgegangen werden, dass die lokal an dieser jeweiligen Stelle durchgeführte Kalibrierung unzuverlässig sein kann, weshalb dann beispielsweise vorgegebene Standardwerte für das Bestimmen der Entfernung verwendet werden können.

Zu der Erfindung gehören auch Weiterbildungen des erfindungsgemäßen Zugangssystems und des erfindungsgemäßen Kraftfahrzeugs, die Merkmale aufweisen, wie sie im Zusammenhang mit den Weiterbildungen des erfindungsgemäßen Verfahrens beschrieben sind und umgekehrt. Um unnötige Redundanz zu vermeiden, sind die entsprechenden Weiterbildungen der Erfindung hier nicht noch einmal für jeden Aspekt der vorliegenden Erfindung separat beschrieben.

Im Folgenden ist ein Ausführungsbeispiel der Erfindung beschrieben. Hierzu zeigt die einzige Figur eine schematische Übersichtsdarstellung zur Veranschaulichung eines Verfahrens zum Kalibrieren eines funkbasierten schlüssellosen Zugangssystems eines Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die einzige Fig. zeigt eine schematische Übersichtsdarstellung zur Veranschaulichung eines Verfahrens zum Kalibrieren eines funkbasierten schlüssellosen Zugangssystems eines Kraftfahrzeugs 1. Das Kraftfahrzeug 1 weist dabei eine erste Sendeeinrichtung 2 zum Ausstrahlen eines hier schematisch angedeuteten LF-Feldes 3 in eine Umgebung des Kraftfahrzeugs 1 auf. Weiterhin weist das Kraftfahrzeug 1 eine LF-Empfangseinrichtung 4 zum Empfangen oder Messen von von der ersten Sendeeinrichtung 2 ausgesendeten Signalen oder Feldern, insbesondere von deren Feldstärke, auf. Weiter weist das Kraftfahrzeug 1 eine zweite Sendeeinrichtung 5 zum Aussenden von Signalen oder Feldern einer im Vergleich zu dem LF-Feld 3 höheren Frequenz auf. Die zweite Sendeeinrichtung 5 umfasst dabei vorliegend eine Empfangseinrichtung für Signale oder Felder dieser höheren Frequenz. Schließlich weist das Kraftfahrzeug 1 eine Signalverarbeitungseinrichtung 6 und eine Umgebungserfassungseinrichtung 14 auf. Die Signalverarbeitungseinrichtung 6 ist durch entsprechende Datenverbindungen mit der ersten Sendeeinrichtung 2, der LF-Empfangseinrichtung 4, der zweiten Sendeeinrichtung 5 und der Umgebungserfassungseinrichtung 14 verbunden, beispielsweise über ein Bordnetz des Kraftfahrzeugs 1.

In der Umgebung des Kraftfahrzeugs 1 ist vorliegend ein Signalgeber 7 dargestellt. Dieser Signalgeber 7 ist Teil des funkbasierten schlüssellosen Zugangssystems für das Kraftfahrzeug 1. Mittels dieses Zugangssystems soll wenigstens eine vorgegebene Funktion oder Funktionalität des Zugangssystems oder des Kraftfahrzeugs 1 automatisch ausgelöst werden, sobald sich der Signalgeber 7, beispielsweise getragen von einem Benutzer des Kraftfahrzeugs 1, bis auf eine vorgegebene Entfernung an das Kraftfahrzeug 1 angenähert hat. Dazu muss also die jeweils aktuelle Entfernung des Signalgebers 7 zu dem Kraftfahrzeug 1 bestimmt werden, da die jeweilige Funktion oder Funktionalität nur bis zu der vorgegebenen Entfernung, also bis zu einem gewissen Reichweitengrenzwert, und nicht in größeren Entfernungen bereitgestellt oder ausgelöst werden soll.

Vorliegend wird dazu von dem Signalgeber 7 eine an seinem Ort aktuell vorliegende Feldstärke des LF-Feldes 3 gemessen und ein entsprechendes Datensignal 8 an das Kraftfahrzeug 1 übermittelt, wo dieses mittels der Signalverarbeitungseinrichtung 6 weiter verarbeitet oder ausgewertet wird. Aus dem Datensignal 8 und einem vorgegebenen Schwellenwert, der eine der vorgegebenen Entfernung zugeordnete Feldstärke des LF-Feldes 3 angibt, wird dann eine angenommene Entfernung - hier entsprechend einer Position 9 - des Signalgebers 7 bestimmt. Dabei wird also basierend auf der mittels des Signalgebers 7 gemessenen Feldstärke des LF-Feldes 3 automatisch bestimmt, ob sich der Signalgeber 7 in höchstens der vorgegebenen Entfernung von dem Kraftfahrzeug 1 befindet. Ist dies der Fall, so würde dann entsprechend die jeweilige Funktion ausgelöst werden. Abhängig von einem Untergrund in der Umgebung des Kraftfahrzeugs 1 kann jedoch eine Ausbreitungscharakteristik oder ein Ausbreitungsverhalten des LF-Feldes 3 in unerwarteter Weise variieren. Dies kann dazu führen, dass die angenommene Entfernung oder Position 9 des Signalgebers 7 von dessen tatsächlicher Entfernung - hier entsprechend einer tatsächlichen Position 10 - abweicht.

Um dieser Problematik entgegenzuwirken, ist es vorgesehen, dass das Zugangssystem, also das automatische Bestimmen der Entfernung des Signalgebers 7 von dem Kraftfahrzeug 1 basierend auf der gemessenen Feldstärke des LF-Feldes 3 automatisch kalibriert wird. Dazu wird mittels der zweiten Sendeeinrichtung 5 ein Kalibrierungssignal 11 ausgesendet, wenn eine an den Signalgeber 7 und/oder an einen Betrieb des Kraftfahrzeugs 1 gekoppelte vorgegebene Bedingung erfüllt ist. Auf das Kalibrierungssignal 11 hin wird von dem Signalgeber 7 ein entsprechendes Antwortsignal 12 an das Kraftfahrzeug übermittelt. Die Signalverarbeitungseinrichtung 6 bestimmt dann anhand der Signallaufzeit zwischen dem Aussenden des Kalibrierungssignals 11 und einem Empfangen des Antwortsignals 12 in dem Kraftfahrzeug 1 automatisch eine Referenzentfernung des Signalgebers 7 von dem Kraftfahrzeug 1. Diese Entfernungsbestimmung mittels einer zweiten Frequenz ist dabei besonders sicher und zuverlässig, da für das Kalibrierungssignal 11 und das Antwortsignal 12 vorliegend eine Frequenz aus dem SHF-Band, beispielsweise 6,6 GHz, verwendet wird, während das LF-Feld 3 beispielsweise eine Frequenz zwischen 100 kHz und 150 kHz hat.

Das auf der gemessenen Feldstärke des LF-Feldes 3 basierende Bestimmen, ob sich der Signalgeber 7 in höchstens der vorgegebenen Entfernung von dem Kraftfahrzeug 1 befindet, wird dann mittels der Signalverarbeitungseinrichtung 6 automatisch in Abhängigkeit von der anhand der Signallaufzeit des Kalibrierungssignals 11 und des Antwortsignals 12 bestimmten Referenzentfernung kalibriert. Es wird also über eine Kombination unterschiedlicher Signale oder Felder, also durch Ausnutzen unterschiedlicher Eigenschaften unterschiedlicher Feldtypen oder Feldarten das LF-Feld 3 eingemessen beziehungsweise die Entfernungsbestimmung kalibriert. Dadurch kann jeweils ein Einfluss der Umgebung des Kraftfahrzeugs 1 auf die entfernungsabhängige Feldstärke des LF-Feldes 3 und somit auf die darauf basierende Entfernungsbestimmung des Signalgebers 7 berücksichtigt werden. Dadurch kann vermieden werden, dass das Zugangssystem in allen Betriebszuständen außerhalb eines schlechtesten Falles mehr eingeschränkt werden muss, als dies jeweils notwendig wäre. Insgesamt kann so eine Verbesserung einer Reichweitengrenzwerteinstellung des Zugangssystems für situationsbedingte Einflüsse erreicht werden, ohne einen Energiehaushalt des Kraftfahrzeugs 1 und/oder des Signalgebers 7 zu sehr zu strapazieren.

Zur weiteren Verbesserung ist es vorliegend vorgesehen, dass mittels der ersten Sendeeinrichtung 2 ein LF-Referenzsignal 13 mit einer vorgegebenen Sendeleistung ausgesendet und mittels der LF-Empfangseinrichtung empfangen wird. Die LF-Empfangseinrichtung ist dabei in einem festen Abstand zu der ersten Sendeeinrichtung 2 an dem Kraftfahrzeug 1 angeordnet. Es wird mittels der LF-Empfangseinrichtung 4 oder der Signalverarbeitungseinrichtung 6 eine am Ort der LF-Empfangseinrichtung 4 gemessene Feldstärke des LF-Referenzsignals 13 bestimmt. Draus wird mittels der Signalverarbeitungseinrichtung 6 ein Korrekturfaktor bestimmt, welcher eine umgebungsbedingte Abweichung der gemessenen Feldstärke des LF-Referenzsignals 13 zu einer vorgegebenen Referenzfeldstärke angibt. Dieser Korrekturfaktor wird von der Signalverarbeitungseinrichtung 6 ebenfalls für das Kalibrieren berücksichtigt.

De Umgebungserfassungseinrichtung 14 kann beispielsweise zwei Kameras zum Erfassen des Untergrundes in der Umgebung des Kraftfahrzeugs 1 umfassen. Von der Umgebungserfassungseinrichtung 14 erfasste Bilddaten werden von der Signalverarbeitungseinrichtung 6 automatisch ausgewertet, um eine Art des Untergrundes in der Umgebung des Kraftfahrzeugs 1 zu bestimmen. Die Signalverarbeitungseinrichtung 6 verwendet dann die bestimmte Art des Untergrundes - beispielsweise Beton, Asphalt, Gras, Erde oder dergleichen - und eine entsprechende Zuordnungstabelle zwischen verschiedenen Untergrundarten und zugeordneten Ausbreitungscharakteristiken des LF-Feldes 3 dazu, die Entfernungsbestimmung und/oder das Kalibrieren zu plausibilisieren.

Insgesamt zeigen die beschriebenen Beispiele, wie eine Genauigkeit eines funkbasierten schlüssellosen Zugangssystems eines Kraftfahrzeugs 1 verbessert werden kann.

### Bezugszeichenliste

- 1: Kraftfahrzeug
- 2: erste Sendeeinrichtung
- 3: LF-Feld
- 4: LF-Empfangseinrichtung
- 5: zweite Sendeeinrichtung
- 6: Signalverarbeitungseinrichtung
- 7: Signalgeber
- 8: Datensignal
- 9: angenommene Position (des Signalgebers 7)
- 10: tatsächliche Position (des Signalgebers 7)
- 11: Kalibrierungssignal
- 12: Antwortsignal
- 13: LF-Referenzsignal
- 14: Umgebungserfassungseinrichtung

## Patentansprüche

1. Verfahren zum Kalibrieren eines funkbasierten schlüssellosen Zugangssystems eines Kraftfahrzeugs (1), bei dem
- mittels einer ersten Sendeeinrichtung (2) des Kraftfahrzeugs (1) ein LF-Feld (3) in eine Umgebung des Kraftfahrzeugs (1) ausgestrahlt wird, und
- basierend auf einer mittels eines von dem Kraftfahrzeug (1) separaten Signalgebers (7) gemessenen Feldstärke des LF-Feldes (3) automatisch bestimmt wird, ob sich der Signalgeber (7) in höchstens einer vorgegebenen Entfernung von dem Kraftfahrzeug (1) befindet, wobei
- wenn eine an den Signalgeber (7) und/oder an einen Betrieb des Kraftfahrzeugs (1) gekoppelte vorgegebene Bedingung erfüllt ist, mittels einer zweiten Sendeeinrichtung (5) des Kraftfahrzeugs (1) ein Kalibrierungssignal (11) mit einer im Vergleich zu dem LF-Feld (3) höheren Frequenz ausgesendet wird, und der Signalgeber (7) daraufhin ein Antwortsignal (12) mit einer ebenfalls im Vergleich zu dem LF-Feld (3) höheren Frequenz an das Kraftfahrzeug (1) zurücksendet,
- aus einer Signallaufzeit zwischen dem Aussenden des Kalibrierungssignals (13) und einem Empfangen des Antwortsignals (12) durch das Kraftfahrzeug (1) automatisch eine Referenzentfernung (10) des Signalgebers (7) von dem Kraftfahrzeug (1) bestimmt wird, und
- das auf der gemessenen Feldstärke des LF-Feldes (3) basierende Bestimmen, ob sich der Signalgeber (7) in höchstens der vorgegebenen Entfernung von dem Kraftfahrzeug (1) befindet, in Abhängigkeit von der anhand der Signallaufzeit bestimmten Referenzentfernung (10) automatisch kalibriert wird;
wobei mittels der ersten Sendeeinrichtung (2) ein LF-Referenzsignal (13) mit einer vorgegebenen Sendeleistung ausgesendet wird und mittels einer an dem Kraftfahrzeug (1) in einem festen Abstand zu der ersten Sendeeinrichtung (2) angeordneten LF-Empfangseinrichtung (4) eine Feldstärke des LF-Referenzsignals (13) gemessen wird,
- aus der gemessenen Feldstärke des LF-Referenzsignals (13), der vorgegebenen Sendeleistung und der Entfernung zwischen der ersten Sendeeinrichtung (2) und der LF-Empfangseinrichtung (4) ein Korrekturfaktor bestimmt wird, welcher eine umgebungsbedingte Abweichung der gemessenen Feldstärke des LF-Referenzsignals (13) zu einer vorgegebenen Referenzfeldstärke angibt, und
- der Korrekturfaktor ebenfalls für das Kalibrieren des Bestimmens, ob sich der Signalgeber (7) in höchstens der vorgegebenen Entfernung von dem Kraftfahrzeug (1) befindet, berücksichtigt wird,
wobei das LF-Referenzsignal (13) in Richtung des Untergrundes ausgesendet und mittels der LF-Empfangseinrichtung (4) ein von dem Untergrund reflektiertes LF-Referenzsignal empfangen wird und ein Einfluss des Untergrundes in der gemessenen Feldstärke des LF-Referenzsignals (13) berücksichtigt wird.

2. Verfahren nach Anspruch 1,
**dadurch gekennzeichnet, dass**
für das Kalibrierungssignal (11) und das Antwortsignal (12) eine Frequenz aus dem SHF-Band verwendet wird.

3. Verfahren nach einem der vorhergehenden Ansprüche,
**dadurch gekennzeichnet, dass**
- für das Kalibrieren ein der vorgegebenen Entfernung zugeordneter Schwellenwert der Feldstärke des LF-Feldes (3) automatisch dynamisch angepasst wird, und
- zum Bestimmen, ob sich der Signalgeber (7) höchstens in der vorgegebenen Entfernung zu dem Kraftfahrzeug (1) befindet, die gemessene Feldstärke des LF-Feldes (3) mit dem angepassten Schwellenwert verglichen wird.

4. Verfahren nach einem der vorhergehenden Ansprüche,
**dadurch gekennzeichnet, dass**
- für das Kalibrieren eine zum Ausstrahlen des LF-Feldes (3) verwendete Sendeleistung der ersten Sendeeinrichtung (2) automatisch dynamisch angepasst wird.

5. Verfahren nach einem der vorhergehenden Ansprüche,
**dadurch gekennzeichnet, dass**
als die vorgegebene Bedingung überprüft wird, ob sich der Signalgeber (7) von dem Kraftfahrzeug (1) entfernt oder an das Kraftfahrzeug (1) annähert.

6. Verfahren nach einem der vorhergehenden Ansprüche,
**dadurch gekennzeichnet, dass**
als die vorgegebene Bedingung ein Auftreten eines Feldstärkesprunges in der Feldstärke des LF-Feldes (3) verwendet wird.

7. Verfahren nach einem der vorhergehenden Ansprüche,
**dadurch gekennzeichnet, dass**
als die vorgegebene Bedingung ein Zeitraster verwendet wird, gemäß welchem das Kalibrierungssignal (11) jeweils ausgesendet wird nach einer vorgegebenen Anzahl von auf der gemessenen Feldstärke des LF-Feldes (3) basierenden Bestimmungen der Entfernung des Signalgebers (7) von dem Kraftfahrzeug (1).

8. Funkbasiertes schlüsselloses Zugangssystem für ein Kraftfahrzeug (1), umfassend einen tragbaren Signalgeber (7), eine erste Sendeeinrichtung (2) für das Kraftfahrzeug (1) zum Ausstrahlen eines LF-Feldes (3) und eines LF-Referenzsignals (13), eine LF-Empfangseinrichtung (4) für das Kraftfahrzeug, eine zweite Sendeeinrichtung (5) für das Kraftfahrzeug (1) zum Ausstrahlen eines Kalibrierungssignals (11) mit einer im Vergleich zu dem LF-Feld (3) höheren Frequenz, und eine Signalverarbeitungseinrichtung (6),
**dadurch gekennzeichnet, dass**
das Zugangssystem eingerichtet ist zum automatischen Durchführen eines Verfahrens gemäß einem der vorhergehenden Ansprüche.

9. Kraftfahrzeug (1) mit einem funkbasierten schlüssellosen Zugangssystem nach Anspruch 8.

## Claims

1. Method for calibrating a radio-based keyless access system of a motor vehicle (1), in which:
- by means of a first transmitting device (2) of the motor vehicle (1), an LF field (3) is emitted into an environment of the motor vehicle (1), and
- based on a field strength of the LF field (3) measured by means of a signal generator (7) separate from the motor vehicle (1), it is automatically ascertained whether the signal generator (7) is located no further than a predetermined distance from the motor vehicle (1), wherein
- if a predetermined condition coupled to the signal generator (7) and/or to an operation of the motor vehicle (1) is fulfilled, a calibration signal (11) having a higher frequency than the LF field (3) is transmitted by means of a second transmitting device (5) of the motor vehicle (1), and in response, the signal generator (7) then sends back to the motor vehicle (1) a response signal (12) having a frequency that is also higher than the LF field (3),
- a reference distance (10) of the signal generator (7) from the motor vehicle (1) is automatically ascertained from a signal delay between transmitting the calibration signal (13) and receiving the response signal (12) by the motor vehicle (1), and
- the ascertainment, based on the measured field strength of the LF field (3), of whether the signal generator (7) is located no further than the predetermined distance from the motor vehicle (1) is automatically calibrated depending on the reference distance (10) ascertained on the basis of the signal delay;
wherein an LF reference signal (13) having a predetermined transmitting power is transmitted by means of the first transmitting device (2), and a field strength of the LF reference signal (13) is measured by means of an LF receiving device (4) arranged on the motor vehicle (1) at a fixed distance from the first transmitting device (2),
- a correction factor is ascertained from the measured field strength of the LF reference signal (13), the predetermined transmitting power and the distance between the first transmitting device (2) and the LF receiving device (4), which correction factor indicates an environmental deviation of the measured field strength of the LF reference signal (13) from a predetermined reference field strength, and
- the correction factor is also taken into account for calibrating the ascertainment of whether the signal generator (7) is located no further than the predetermined distance from the motor vehicle (1),
wherein the LF reference signal (13) is transmitted in the direction of the ground and an LF reference signal reflected from the ground is received by means of the LF receiving device (4), and an influence of the ground is taken into account in the measured field strength of the LF reference signal (13).

2. Method according to claim 1,
**characterized in that**
a frequency from the SHF band is used for the calibration signal (11) and the response signal (12).

3. Method according to any of the preceding claims,
**characterized in that**
- for the calibrating, a threshold value of the field strength of the LF field (3), which threshold value is assigned to the specified distance, is automatically dynamically adjusted, and
- for the ascertainment of whether the signal generator (7) is located no further than the predetermined distance from the motor vehicle (1), the measured field strength of the LF field (3) is compared with the adjusted threshold value.

4. Method according to any of the preceding claims,
**characterized in that**
- for the calibrating, a transmitting power of the first transmitting device (2), which transmitting power is used to emit the LF field (3), is automatically dynamically adjusted.

5. Method according to any of the preceding claims,
**characterized in that**
whether the signal generator (7) is moving away from the motor vehicle (1) or approaching the motor vehicle (1) is checked as the predetermined condition.

6. Method according to any of the preceding claims,
**characterized in that**
the occurrence of a field strength jump in the field strength of the LF field (3) is used as the predetermined condition.

7. Method according to any of the preceding claims,
**characterized in that**
a timeframe is used as the predetermined condition, according to which timeframe the calibration signal (11) is transmitted after the distance of the signal generator (7) from the motor vehicle (1) has been ascertained a predetermined number of times based on the measured field strength of the LF field (3).

8. Radio-based keyless access system for a motor vehicle (1), comprising a portable signal generator (7), a first transmitting device (2) for the motor vehicle (1), for emitting an LF field (3) and an LF reference signal (13), an LF receiving device (4) for the motor vehicle, a second transmitting device (5) for the motor vehicle (1), for emitting a calibration signal (11) having a higher frequency than the LF field (3), and a signal processing device (6),
**characterized in that**
the access system is configured to automatically carry out a method according to any of the preceding claims.

9. Motor vehicle (1) comprising a radio-based keyless access system according to claim 8.

## Revendications

1. Procédé d'étalonnage d'un système d'accès sans clé basé sur la technologie radio d'un véhicule automobile (1), dans lequel
- un champ LF (3) est émis dans un environnement du véhicule automobile (1) au moyen d'un premier dispositif émetteur (2) du véhicule automobile (1), et
- sur la base d'une intensité de champ du champ LF (3) mesurée au moyen d'un générateur de signaux (7) séparé du véhicule automobile (1), on détermine automatiquement si le générateur de signaux (7) se trouve au maximum à une distance prédéfinie du véhicule automobile (1), dans lequel
- lorsqu'une condition prédéfinie couplée au générateur de signaux (7) et/ou à un fonctionnement du véhicule automobile (1) est remplie, un signal d'étalonnage (11) est émis au moyen d'un second dispositif émetteur (5) du véhicule automobile (1) avec une fréquence plus élevée par rapport au champ LF (3), et le générateur de signaux (7) renvoie ensuite au véhicule automobile (1) un signal de réponse (12) avec une fréquence également plus élevée par comparaison avec le champ LF (3),
- à partir d'un temps de propagation de signal entre l'émission du signal d'étalonnage (13) et une réception du signal de réponse (12) par le véhicule automobile (1), on détermine automatiquement une distance de référence (10) du générateur de signaux (7) par rapport au véhicule automobile (1), et
- la détermination, basée sur l'intensité de champ mesurée du champ LF (3), établissant si le générateur de signaux (7) se trouve au maximum à la distance prédéfinie du véhicule automobile (1), est étalonnée automatiquement en fonction de la distance de référence (10) déterminée à l'aide du temps de propagation de signal ;
dans lequel un signal de référence LF (13) est émis au moyen du premier dispositif émetteur (2) avec une puissance d'émission prédéfinie et une intensité de champ du signal de référence LF (13) est mesurée au moyen d'un dispositif récepteur LF (4) agencé sur le véhicule automobile (1) à une distance fixe du premier dispositif émetteur (2),
- à partir de l'intensité de champ mesurée du signal de référence LF (13), de la puissance d'émission prédéterminée et de la distance entre le premier dispositif émetteur (2) et le dispositif récepteur LF (4), on détermine un facteur de correction qui indique un écart, dû à l'environnement, entre l'intensité de champ mesurée du signal de référence LF (13) et une intensité de champ de référence prédéfinie, et
- le facteur de correction est également pris en compte pour l'étalonnage de la détermination établissant si le générateur de signaux (7) se trouve au maximum à la distance prédéfinie du véhicule automobile (1),
dans lequel le signal de référence LF (13) est émis en direction du sous-sol et un signal de référence LF réfléchi par le sous-sol est reçu au moyen du dispositif récepteur LF (4) et une influence du sous-sol est prise en compte dans l'intensité de champ mesurée du signal de référence LF (13).

2. Procédé selon la revendication 1,
**caractérisé en ce que**
une fréquence de la bande SHF est utilisée pour le signal d'étalonnage (11) et le signal de réponse (12).

3. Procédé selon l'une des revendications précédentes,
**caractérisé en ce que**
- pour l'étalonnage, une valeur seuil de l'intensité de champ du champ LF (3) associée à la distance prédéfinie est adaptée automatiquement de manière dynamique, et
- pour la détermination établissant si le générateur de signaux (7) se trouve au maximum à la distance prédéfinie du véhicule automobile (1), on compare l'intensité de champ mesurée du champ LF (3) à la valeur seuil adaptée.

4. Procédé selon l'une des revendications précédentes,
**caractérisé en ce que**
- pour l'étalonnage, une puissance d'émission du premier dispositif émetteur (2) utilisée pour rayonner le champ LF (3) est adaptée automatiquement de manière dynamique.

5. Procédé selon l'une des revendications précédentes,
**caractérisé en ce que**
en tant que condition prédéfinie, on vérifie si le générateur de signaux (7) s'éloigne du véhicule automobile (1) ou s'approche du véhicule automobile (1).

6. Procédé selon l'une des revendications précédentes,
**caractérisé en ce que**
en tant que condition prédéfinie, on utilise une apparition d'un saut d'intensité de champ dans l'intensité de champ du champ LF (3).

7. Procédé selon l'une des revendications précédentes,
**caractérisé en ce que**
en tant que condition prédéfinie, on utilise une trame de temps selon laquelle le signal d'étalonnage (11) est émis respectivement après un nombre prédéfini de déterminations de la distance du générateur de signaux (7) par rapport au véhicule automobile (1), déterminations basées sur l'intensité de champ mesurée du champ LF (3).

8. Système d'accès sans clé basé sur la technologie radio pour un véhicule automobile (1), comprenant un générateur de signaux (7) portable, un premier dispositif émetteur (2) pour le véhicule automobile (1) destiné à rayonner un champ LF (3) et un signal de référence LF (13), un dispositif récepteur LF (4) pour le véhicule automobile, un second dispositif émetteur (5) pour le véhicule automobile (1) destiné à rayonner un signal d'étalonnage (11) avec une fréquence plus élevée par comparaison avec le champ LF (3), et un dispositif de traitement de signal (6),
**caractérisé en ce que**
le système d'accès est conçu pour exécuter automatiquement un procédé selon l'une des revendications précédentes.

9. Véhicule automobile (1) comportant un système d'accès sans clé basé sur la technologie radio selon la revendication 8.
